## Europäisches Patentamt

## European Patent Office

## Office européen des brevets

(11) Veröffentlichungsnummer: **0 445 408 B1**

(12) **EUROPÄISCHE PATENTSCHRIFT**

(45) Veröffentlichungstag der Patentschrift: **12.10.94**

(51) Int. Cl.5: **B01D 53/36**, B01J 29/04

(21) Anmeldenummer: **90124843.5**

(22) Anmeldetag: **20.12.90**

(54) **Verfahren zur Reduktion von in Abgasen enthaltenen Stickoxiden.**

(30) Priorität: **06.02.90 DE 4003515**

(43) Veröffentlichungstag der Anmeldung:
**11.09.91 Patentblatt 91/37**

(45) Bekanntmachung des Hinweises auf die
Patenterteilung:
**12.10.94 Patentblatt 94/41**

(84) Benannte Vertragsstaaten:
**BE DE ES FR GB IT**

(56) Entgegenhaltungen:
**EP-A- 0 149 966**
**EP-A- 0 263 399**
**DE-A- 3 642 018**
**DE-A- 3 830 045**
**DE-A- 3 841 990**

(73) Patentinhaber: **BAYER AG**

**D-51368 Leverkusen (DE)**

Patentinhaber: **V O L K S W A G E N Aktiengesellschaft**

**D-38436 Wolfsburg (DE)**

(72) Erfinder: **Held, Wolfgang, Dr. Ing.**
**Wilhelmstrasse 1**
**W-3180 Wolfsburg 11 (DE)**
Erfinder: **König, Axel, Dr.-Ing.**
**Galgenkamp 21**
**W-3180 Wolfsburg 21 (DE)**
Erfinder: **Puppe, Lothar, Dr. Dipl.-Chem.**
**Am Weiher 10 A**
**W-5093 Burscheid (DE)**

**Beschreibung**

Die Erfindung betrifft ein Verfahren zur Reduktion von in Abgasen, insbesondere von Verbrennungskraftmaschinen enthaltenen Stickoxiden mittels eines Zeolith-haltigen Katalysators.

Ein derartiges Verfahren sowie eine Einrichtung zur Durchführung desselben sind aus der DE-A 3 642 018 bekannt. Wie dort im einzelnen ausgeführt, kann der Zeolith-Katalysator, der als monolithischer Katalysator oder als Schüttgut-Katalysator ausgebildet sein kann, bevorzugt Zeolithe vom Typ X, Y oder Mordenit enthalten. Die Wirkungsweise dieses bekannten Verfahrens beruht darauf, daß die in den Abgasen beispielsweise einer Kraftfahrzeug-Brennkraftmaschine enthaltenen Stickoxide mit den ebenfalls in den Abgasen normalerweise vorhandenen Kohlenwasserstoffen als Reduktionsmittel und dem bei Verbrennung eines mageren Kraftstoff-Luft-Gemisches vorhandenen Sauerstoff umgesetzt werden. Damit kann auf die bekannte, aus verschiedenen Gründen insbesondere bei Kraftfahrzeugen problematische Zugabe von Ammoniak als Reduktionsmittel verzichtet werden.

Voraussetzung für die beschriebene Wirkung des bekannten Verfahrens ist also ein bestimmter Mindestwert der Kohlenwasserstoff-Konzentration im Abgas, da diese, wie beschrieben, als Reduktionsmittel dienen. Demgemäß ist das bekannte Verfahren in den Fällen zumindest nicht optimal einsetzbar, in denen, wie bei Dieselmaschinen oder Ottomotoren mit Benzin-Direkteinspritzung, die Kohlenwasserstoff-Konzentration im Abgas deutlich geringer als die Stickoxid-Konzentration ist.

In einer prioritätsälteren Anmeldung gemäß DE-A-3 830 045 wird diese Aufgabe dadurch gelöst, daß dem Sauerstoff im Überschuß enthaltenden Abgasstrom Harnstoff zugesetzt wird, wobei die Zugabe und Speicherung problematischer Reduktionsmittel wie Ammoniak vermieden wird.

Harnstoff reduziert dabei die Stickoxide in einem Sauerstoff im Überschuß enthaltenden Abgasstrom an einem Katalysator. Dies beruht wohl darauf, daß Harnstoff ($H_2N$-CO-$NH_2$) leicht zu $CO_2$ und 2 $NH_3$ hydrolysiert oder sich unter Bildung von $NH_2$-Radikalen zersetzt.

Letztlich ist Harnstoff also ein Speicher für ein reduzierendes Agens. Zwar muß beispielsweise zur Behandlung der von einer Kraftfahrzeug-Brennkraftmaschine emittierten Abgase das Reduktionsmittel in einem fahrzeugfesten Tank mitgeführt werden, jedoch liegt es in unproblematischer Form in Gestalt von wäßriger Harnstofflösung vor, und das reduzierende Agens wird erst später gebildet.

Die Zumessung des Reduktionsmittels kann so erfolgen, daß 50 % bis 200 % der theoretisch erforderlichen Menge, bevorzugt 80 % bis 100 % der erforderlichen Menge dosiert werden.

An einem Cu-ausgetauschten Zeolith vom ZSM-Typ (ZSM-5) wurde mit Harnstoff beispielsweise folgende $NO_x$-Reduktion erreicht:

**Tabelle 1:**

| $NO_x$ : Harnstoff | 1 : 0,25 | 1 : 0,41 | 1 : 0,52 | 1 : 0,83 |
|---|---|---|---|---|
| $NO_x$-Umsatz % | 50 % | 74 % | 83 % | 99 % |

Die Reduktionsmittelzugabe wird man demgemäß in Abhängigkeit von der Betriebsweise bzw. Betriebsgrößen der das Abgas erzeugenden Einrichtung, also beispielsweise einer Brennkraftmaschine, steuern oder regeln. Beispielsweise bei einer Fahrzeug-Brennkraftmaschine ergibt sich im Fahrbetrieb in Abhängigkeit von dem jeweiligen Betriebspunkt der Maschine, der zum Beispiel durch Drehzahl und Last definiert ist, im Abgas eine bestimmte Stickoxid-Konzentration, und die Steuerung bzw. Regelung der Reduktionsmittelzugabe erfolgt so, daß das Abgas in Strömungsrichtung hinter dem zeolithischen Katalysator möglichst geringe Anteile an Reduktionsmittel und Stickoxiden enthält.

Im beispielhaften Versuch wird angenommen, daß ein Mol Harnstoff zwei Mol eines reduzierten Agenz bildet. Die Harnstoffdosierung wurde so gewählt, daß ca. 90 % der theoretisch erforderlichen Reduktionsmittelmenge zur Verfügung steht. Die Raumgeschwindigkeit wurde so gewählt, daß 12.900 h$^{-1}$ erreicht wurden.

Die in der älteren Anmeldung beanspruchten Cu-haltigen zeolithischen Katalysatoren erreichen jedoch bei niedrigen Abgastemperaturen, so wie sie in der Anfahrphase bei Dieselkraftmaschinen üblich sind, nur geringe Konvertierungsraten. Wünschenswert ist es aber, bei der Anfahrphase schon eine möglichst hohe Konvertierung zu erzielen.

Daher ist ein wichtiges Kriterium für die Beurteilung eines Katalysators die Anspringtemperatur. Es wurde nun gefunden, daß oxidische Zusätze zum beispielsweise Cuausgetauschten Zeolith-Katalysator die gewünschten Eigenschaften des Katalysators fördern.

Gegenstand der vorliegenden Erfindung ist nun ein Verfahren zur Reduktion von in Rauchgasen und Abgasen, insbesondere von Verbrennungskraftmaschinen, enthaltenen Stickoxiden unter oxydierenden Bedingungen mittels eines Zeolith-Katalysators, der gegebenenfalls ausgetauschte Metallionen enthalten kann, und mit einem Reduktionsmittel, welches dadurch gekennzeichnet ist, daß ein zeolithischer Katalysator, der Oxide der Übergangs-Elemente der Perioden 4, 5, 6 und/oder Oxide der Seltenen Erden in Mengen von 0,1 bis 20 Gew.-% enthält, und als Reduktionsmittel Harnstoff eingesetzt werden. Bevorzugt sind die Gruppen IIIb bis VIII sowie 1b und IIb.

In Tabelle 2 ist die Erhöhung der NO-Umsatzrate durch oxidische Zusätze wie z. B. $TiO_2$, $V_2O_5$, $WO_3$ oder $CuCr_2O_4$ bei niedriger Temperatur dargestellt.

Für das erfindungsgemäße Verfahren geeignete oxidische Zusätze sind beispielsweise: $TiO_2$, $V_2O_5$, $Cr_2O_3$, $MnO_2$, $Fe_2O_3$, $CoO$, $NiO$, $CuO$, $Y_2O_3$, $ZrO_2$, $Nb_2O_5$, $MoO_3$, $La_2O_3$, $Ce_2O_3$, $WO_3$.

Ebenfalls geeignet sind entsprechende Mischungen aus den Oxiden. Die Mischungen können zwei oder mehr oxidische Komponenten enthalten.

Eingesetzt werden die Oxide in Mengen von 0,1 bis 20 Gew % bezogen auf die Zeolith/Bindemittel-Kombination, bevorzugt 0,5 bis 10 Gew %.

Besonders geeignete oxidische Zusätze sind $TiO_2$, $V_2O_5$, $WO_3$, $MoO_3$, $CuCr_2O_4$, $La_2O_3$ und $Ce_2O_3$.

Die oxidischen Zusätze werden üblicherweise der Zeolithe/Bindemittel-Kombination zugemischt und die Mischung durch intensive Mahlung, z. B. mit Rührwerkskugelmühlen, homogenisiert. Anschließend werden die Mischungen durch Trocknen granulierfeucht gestellt und mit geeigneten Aggregaten z. B. Walzengranulatoren, Extrudern, zu Formlingen verpreßt. Eine Beschichtung von monolithischen Trägern mit einer Suspension aus dem aktiven Komponenten kann ebenfalls vorgenommen werden.

**Tabelle 2:** $NO_x$-Umsatz (%)

| Temperatur | CuHZSM5 | CuHZSM5 2 % $TiO_2$ | CuHZSM5 1 % $V_2O_5$ | CuHZSM5 2 % $WO_3$ | CuHZSM5 2 % $CuCr_2O_4$ |
|---|---|---|---|---|---|
| 150° C | 6 | 0 | 0 | 6 | 6 |
| 200° C | 47 | 57 | 53 | 70 | 73 |
| 250° C | 94 | 97 | 94 | 97 | 97 |
| 300° C | 97 | 100 | 97 | 98 | 98 |
| 350° C | 100 | 100 | 97 | 100 | 100 |
| 400° C | 91 | 100 | 91 | 91 | 88 |

Ein herausragendes Merkmal der gefundenen Katalysatorformulierung ist, daß der Katalysator bei Temperaturen unter 400 ° C, schon im Bereich von 200 ° C über 70 % NO-Konvertierung erreicht.

Der beschriebene Katalysator zeichnet sich dadurch aus, daß er in einem breiten Temperaturbereich aktiv ist und seine Aktivität bei niedriger Temperatur im Vergleich zu nicht katalytischen Verfahren erreicht, die bei 800 ° C bis über 1000 ° C arbeiten.

Die in Tabelle 2 dargestellten Versuche wurden bei einer Raumgeschwindigkeit von 12.900 $h^{-1}$ durchgeführt. Dies ist deutlich höher als die bei SCR-Verfahren sonst übliche Raumgeschwindigkeit von ca. 6.000 bis 10.000 $h^{-1}$.

Eine weitere Erhöhung der Raumgeschwindigkeit führt nicht zu einer proportionalen Verschlechterung der NO-Umsatzrate wie in Tabelle 3 beispielhaft an einem Cuausgetauschten Zeolithkatalysator dargestellt ist.

Tabelle 3:

| Temperatur $^{\circ}$C | 12.900 h$^{-1}$ | % NO-Umsatz bei 19.700 h$^{-1}$ | 39.500 h$^{-1}$ |
|---|---|---|---|
| 150 | 6 | 3 | 3 |
| 200 | 47 | 31 | 22 |
| 250 | 94 | 77 | 56 |
| 300 | 97 | 89 | 88 |
| 350 | 100 | 89 | 92 |
| 400 | 91 | 89 | 88 |

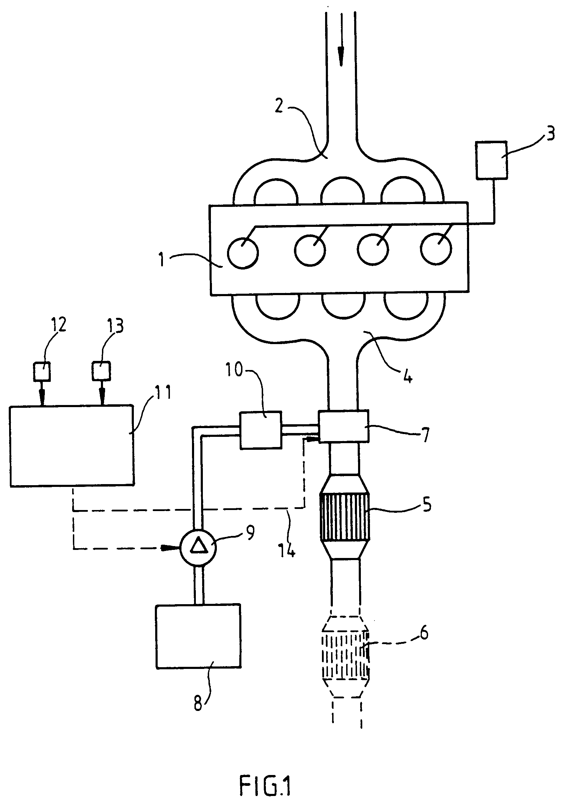

Die Erfindung wird im folgenden anhand der Fig. 1 erläutert, die ein Ausführungsbeispiel für eine Einrichtung zur Durchführung des erfindungsgemäßen Verfahrens an einer Fahrzeug-Brennkraftmaschine wiedergibt.

In dem dargestellten Ausführungsbeispiel handelt es sich um eine Diesel-Brennkraftmaschine 1 mit Ansaugleitung 2, Kraftstoffzuführung 3 und Abgasanlage 4. Von dieser gelangen die Abgase zu dem zeolithischen Katalysator 5, der einen im einzelnen aus der eingangs genannten DE-A-3 642 018 bekannten Aufbau bzw. eine entsprechende Zusammensetzung besitzen kann, und von diesem in den Oxidationskatalysator 6, der aber auch in Fortfall kommen kann.

Dies ist dann möglich, wenn der Zeolith-Katalysator so ausgebildet ist, daß er auch als Oxidationskatalysator wirken kann. Eine weitere Möglichkeit ist, den Oxidationskatalysator vor dem Zeolithkatalysator anzuordnen.

In Strömungsrichtung vor dem Zeolithkatalysator 5 liegt die Zugabevorrichtung 7 für ein Harnstoff enthaltendes oder vollständig aus Harnstoff bestehendes Reduktionsmittel. Dieses ist in flüssiger Form in dem Tank 8 gespeichert und wird über eine Fördereinrichtung der Zugabevorrichtung zugeführt. Die Fördereinrichtung kann eine Pumpe sein oder erhöhter Druck im Vorratstank (8).

Die Heizeinrichtung 10 besitzt einen an sich bekannten Aufbau; beispielsweise kann sie als wesentliche Bestandteile eine Glühkerze oder einen elektrisch beheizten Igel enthalten. Bei warmer Maschine erfolgt die Zersetzung des Harnstoffs durch das heiße Abgas.

Die Fördermenge wird so gesteuert bzw. geregelt, daß die zur Reduktion der jeweils im Abgas vorliegenden Stickoxidmenge erforderliche Menge des Reduktionsmittels bei 7 dem Abgas zugeführt wird. Der Stickoxidgehalt der Abgases ist abhängig von der jeweiligen Betriebsweise der Brennkraftmaschine 1, wobei der jeweilige Betriebspunkt durch die jeweiligen Werte von Drehzahl und Last der Maschine 1 definiert werden kann. Demgemäß wird die Pumpe über einen Kennfeldspeicher 11 hinsichtlich ihrer Fördermenge gesteuert oder geregelt, dem Signale eines Drehzahlsensors 12 und eines Lastsensors 13 der Maschine 1 zugeführt weren und in dem den verschiedenen Drehzahl- und Lastwerten entsprechende Werte für den Stickoxidgehalt des Abgases der Maschine 1 gespeichert sind. Der Speicher 11 liefert dann dem jeweiligen Stickoxidgehalt entspechende Ansteuersignale an die Pumpe 9.

Wie durch die Linie 14 angedeutet, kann statt der Pumpe auch die beispielsweise als elektromagnetisches Einspritzventil ausgebildete Einrichtung 7 entspechend angesteuert werden.

Durch die Erfindung ist also eine Möglichkeit zur Reduktion von in Abgasen enthaltenen Stickoxiden unter Vermeidung problematischer Reduktionsmittel an einem zeolithhaltigen Katalysator auch bei geringem Kohlenwasserstoffgehalt der Abgase geschaffen.

## Patentansprüche

1. Verfahren zur Reduktion von in Rauchgasen und Abgasen, insbesondere von Verbrennungskraftmaschinen, enthaltenen Stickoxiden unter oxydierenden Bedingungen mittels eines Zeolith-Katalysators, der gegebenenfalls ausgetauschte Metallionen enthalten kann, und mit einem Reduktionsmittel, dadurch gekennzeichnet, daß ein zeolithischer Katalysator, der Oxide der Übergangs-Elemente der Perioden 4, 5, 6 und/oder Oxide der seltenen Erden in Mengen von 0,1 bis 20 Gew.-% enthält, und als Reduktionsmittel Harnstoff eingesetzt werden.

**2.** Verfahren nach Apruch 1, dadurch gekennzeichnet, daß die Zugabemenge des Reduktionsmittels mittels eines Kennfeldspeichers (11) für den Stickoxidgehalt der Abgase bei verschiedenen Werten der Betriebsgrößen derart beeinflußt wird, daß jeweils etwa die zur vollständigen Reduktion der Stickoxide erforderliche Menge des Reduktionsmittels zugegeben wird.

**3.** Verfahren nach einem der Ansprüche 1 oder 2, dadurch gekennzeichnet, daß als Zeolithe solche vom Typ des Faujasits, Mordenits und/oder $SiO_2$-reiche Zeolithe eingesetzt werden.

**Claims**

**1.** A process for the reduction of nitrogen oxides in flue gases and exhaust gases, especially from internal combustion engines, under oxidising conditions using a zeolite catalyst, which optionally can contain exchanged metal ions, and using a reducing agent, characterised in that a zeolitic catalyst which contains oxides of the transition elements from periods 4, 5, 6 and/or oxides of the rare earth metals in amounts of 0.1 to 20 wt.% is used, and that urea is used as the reducing agent.

**2.** A process according to Claim 1, characterised in that the amount of reducing agent added is controlled by a performance characteristics storage unit (11) for the nitrogen oxide content of the exhaust gases at different values for the operating data in such a way that approximately the amount of reducing agent required for complete reduction of the nitrogen oxides is added each time.

**3.** A process according to one of Claims 1 or 2, characterised in that the zeolites used are those of the faujasite or mordenite type and/or $SiO_2$-rich zeolites.

**Revendications**

**1.** Procédé de réduction d'oxydes d'azote contenus dans les gaz de fumées et les gaz d'échappement, en particulier dans ceux de machines à combustion interne, dans des conditions oxydantes au moyen d'un catalyseur de zéolithe, qui peut éventuellement contenir des ions métalliques échangés, et avec un agent réducteur, caractérisé en ce qu'on utilise un catalyseur zéolithique, qui contient des oxydes des éléments de transition des périodes 4, 5, 6 et/ou des oxydes des terres rares en quantité comprise entre 0,1 et 20 % en poids, et de l'urée en tant qu'agent réducteur.

**2.** Procédé selon la revendication 1, caractérisé en ce qu'on agit sur la quantité d'agent réducteur ajoutée au moyen d'une mémoire de cartographie (11) pour la teneur en oxydes d'azote des gaz d'échappement pour différentes valeurs des mesures de fonctionnement de telle sorte qu'à chaque fois est approximativement ajoutée la quantité d'agent réducteur nécessaire pour la réduction complète des oxydes d'azote.

**3.** Procédé selon l'une quelconque des revendications 1 ou 2, caractérisé en ce qu'on utilise comme zéolithe une zéolithe de type faujasite, mordénite et/ou d'une zéolithe riche en $SiO_2$.

FIG.1